# EUROPEAN PATENT SPECIFICATION

(11) **EP 3 845 998 B1**
(45) Date of publication and mention of the grant of the patent: **05.01.2022**
(21) Application number: 20187266.0
(22) Date of filing: 22.07.2020
(51) Int. Cl.: G06F 1/16, H04M 1/02

(54) **PORTABLE ELECTRONIC DEVICE**
TRAGBARE ELEKTRONISCHE VORRICHTUNG
DISPOSITIF ÉLECTRONIQUE PORTABLE

(30) Priority: 06.01.2020 TW 109100343
(43) Date of publication of application: 07.07.2021
(73) Proprietor: Acer Incorporated, New Taipei City 221 (TW)
(72) Inventor: Huang, Yi-Ta, 221 New Taipei City (TW); Lee, Wu-Chen, 221 New Taipei City (TW); Ling, Cheng-Nan, 221 New Taipei City (TW); Tai, Wen-Chieh, 221 New Taipei City (TW); Chuang, Kun-You, 248 New Taipei City (TW)
(74) Representative: 2K Patentanwälte Blasberg Kewitz & Reichel

(56) References cited:
- DE-B3-102015 109 524
- US-A1- 2011 289 726
- US-A1- 2015 040 353
- US-A1- 2016 138 310
- US-A1- 2017 138 102
- US-B1- 9 103 147

## Description

### BACKGROUND

### Technical Field

The disclosure relates to a portable electronic device.

### Description of Related Art

Portable computing devices, such as palmtop computers, portable computers, notebook computers, and personal digital assistants (PDAs) have become more and more popular. In general, a portable electronic device includes a base and a display assembly configured for the display of the base to comply with user operation and viewing purposes. In particular, as touch display technology advances through time, for portable computers, touch screens have gradually become the basic equipment.

Taking the notebook computer as an example, a hinge between two device bodies is used as a mechanism to cause movement between the bodies; however, once it is equipped with a touch screen, then the hinge must be sufficient to support a force applied on the touch screen by a user while the bodies are unfolded. At the same time, cables connecting between the bodies also need to pass through a hinge structure. Thus, how to enable the hinge structure to have both a support force and a structural strength that comply with user's operating requirements has become a problem faced by relevant designers.

DE 10 2015 109524 B3 discloses a double axis of rotation arrangement for foldable electronic devices, which is arranged on the two sides between the base and the cover of a foldable electronic device. The rotation arrangement has a first axis of rotation and a second axis of rotation which are pivotably connected to one another in an axle sleeve, a sliding body being arranged between the first and second axis of rotation with which the deviation of the pivot angles of the two first axes of rotation and the deviation of the angle of rotation by which the two axle sleeves each rotate about the second axes of rotation can be restricted to a certain range.

US 2016/138310 A1 discloses a multiple-stage positioning structure of dual shafts including a dual shaft assembly, which includes first and second rotary shafts that are connected to each other with coupling members for being rotated synchronously. The first rotary shaft has a curved section and a planar section. Positioning sleeves are fit over the first and the second rotary shafts. Bearing members bear a positioning bar in such a way to have the planar section of the first rotary shaft in contact engagement with a lateral planar section of the positioning bar. When the first rotary shaft is rotated to have the curved section engage the lateral planar section of the positioning bar, an effect of outward expanding and stretching the positioning sleeves is induced. When the first rotary shaft is rotated to have the planar section re-engage the lateral planar section of the positioning bar, an effect of positioning is induced.

US 2011/289726 A1 discloses a hinge mechanism including a first rotation assembly, a second rotation assembly substantially parallel to the first rotation assembly, a first connection member, and a second connection member. The first and second rotation assemblies include a first and second pivoting shafts and a first and second brackets sleeved on the first and second pivoting shafts, respectively, and both the first and second brackets includes an engaging portion eccentrically formed on one end respectively thereof. The first connection member includes two pivotal portions. The pivotal portions are rotatably connected to the engaging portions of the first bracket and the second bracket, respectively. The second connection member is sleeved on the first pivoting shaft and the second pivoting shaft.

US 9 103 147 B1 discloses a synchronized multiple-angle rotatable dual-pivot structure including a first pivot, a second pivot, a plurality of connection members, and a support frame. The first pivot and the second pivot are each provided with an installation slot. The connection members are of the same length and each has two ends respectively and movably mounted in the installation slots of the first pivot and the second pivot. The support frame has two ends respectively coupled to the first pivot and the second pivot. The connection members are connected between the first pivot and the second pivot so that when one of the first pivot and the second pivot is rotated, forces are induced between the first pivot and the second pivot to mutually pull and push each other so that synchronized rotation can be achieved in an easy and effortless manner and the rotation angle can reach at least 180 degrees.

Furthermore, conventional hinge structure often results in a noticeable gap between the screen and the system body of the notebook computer, thereby resulting in poor visual effects. Therefore, how to provide a portable electronic device with support, structural strength and user visual habit compliance is an issue to be solved by the related technical personnel in the art.

### SUMMARY

Embodiments of the disclosure provide a portable electronic device, which provides an angle change during rotation and opening of device bodies through an eccentric linking rod between two hinges, so as to compensate for a gap between the device bodies.

A portable electronic device according to independent claim 1 of the present invention includes a first body, a second body, a first hinge, a second hinge, and a linking rod. The first hinge is connected to the first body, and the second hinge is connected to the second body. The linking rod has a first end and a second end opposite to each other, and the first end is pivoted to the first hinge and eccentric to a rotation axis of the first hinge. The second end is pivoted to the second hinge and eccentric to a rotation axis of the second hinge. The first body and the second body are rotated to be closed to or far away from each other through the first hinge, the second hinge and the linking rod. In the portable device an eccentric distance of a pivotal connection between the first end and the first hinge with respect to the rotation axis of the first hinge is greater than an eccentric distance of a pivotal connection between the second end and the second hinge with respect to the rotation axis of the second hinge. Preferred embodiments thereof are laid down in the dependent claims.

Based on the above, the device bodies of the portable electronic device, in addition to being provided with the dual hinges to serve as a mechanism for rotating to be closed or unfolded with each other, are also connected to the dual hinges via the linking rod, and the two opposite ends of the linking rod and the pivotal connections between the dual hinges are respectively eccentric to the rotation axes of the dual hinges. As such, during the process when the first body and the second body are rotating to be closed or unfolded, structures of the device bodies that are respectively located adjacent to the hinges can change in relative positions due to the configuration of the linking rod, so as to move way or close to each other; and when the device bodies move closer to each other, a fixed spacing between the device bodies that is caused by the dual hinges can be compensated, so that the device bodies can be maintained in a state of abutting against each other when unfolded, thereby allowing a user to experience better visual effects when operating the portable electronic device.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic view illustrating a portable electronic device according to an embodiment of the disclosure.
FIG. 2A and FIG. 2B are respective exploded views of the portable electronic device of FIG. 1.
FIG. 3 to FIG. 6 are partial side views illustrating the portable electronic device in different states.
FIG. 7 illustrates a hinge stroke schematic view of the portable electronic device.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

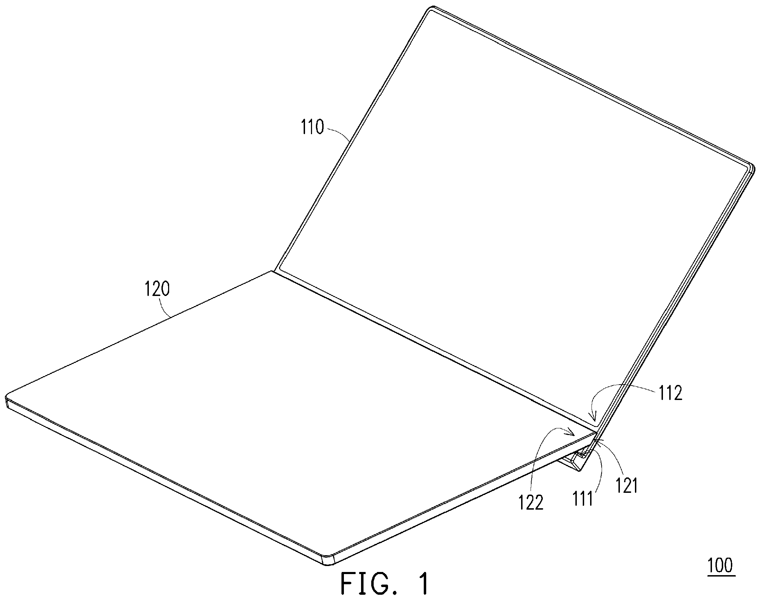

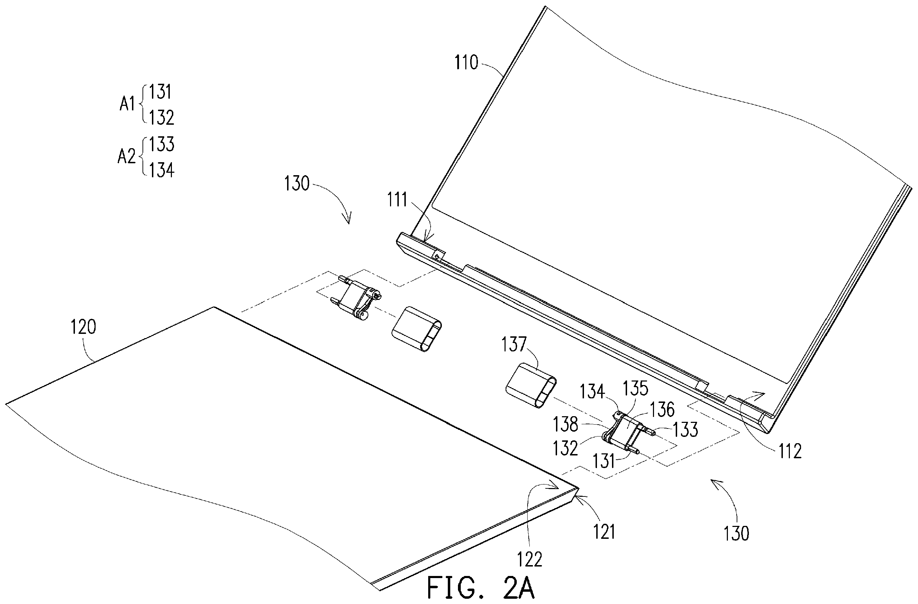

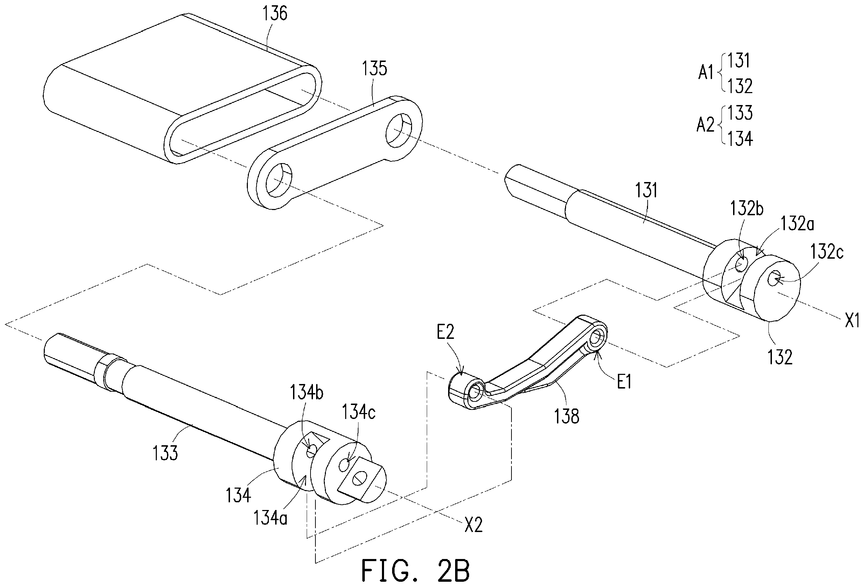

FIG. 1 is a schematic view illustrating a portable electronic device according to an embodiment of the disclosure. FIG. 2A and FIG. 2B are respective exploded views of the portable electronic device of FIG. 1. Referring to FIG. 1, FIG. 2A and FIG. 2B at the same time, in the present embodiment, the portable electronic device 100, such as a notebook computer, includes a first body 110, a second body 120 and a hinge module 130, wherein the hinge module 130 is connected between the first body 110 and the second body 120 so as to enable the first body 110 and the second body 120 can rotate relative to each other to be opened or closed. The hinge module 130 includes a first hinge A1, a second hinge A2 and a linking rod 138. The first hinge A1 is connected to the first body 110, and the second hinge A2 is connected to the second body 120. The linking rod 138 has a first end E1 and a second end E2 opposite to each other, and the first end E1 is pivoted to the first hinge A1 and eccentric to a rotation axis X1 of the first hinge A1. The second end E2 is pivoted to the second hinge A2 and eccentric to a rotation axis X2 of the second hinge A2. The first body 110 and the second body 120 are rotated to be closed to or far away from each other through the first hinge A1, the second hinge A2 and the linking rod 138.

FIG. 2A shows a pair of hinge modules 130 being connected between the first body 110 and the second body 120, and since structural components of the pair of hinge modules 130 are the same, in order to facilitate identification, reference numbers are only provided for the hinge module 130 illustrated on the right. Further speaking, the first hinge A1 has a first hinge portion 131 and a first head portion 132 that are coaxially arranged, and the first hinge portion 131 is connected to the first body 110 so as to be driven by the first body 110. The first head portion 132 has first eccentric holes 132b and 132c, and the first end E1 of the linking rod 138 is pivoted to the first eccentric holes 132b and 132c. In the present embodiment, an outer diameter of the first head portion 132 is greater than an outer diameter of the first hinge portion 131, the first head portion 132 further has a first gap 132a, and the first end E1 of the linking rod 138 is substantially located within the first gap 132a so as to be pivoted between the first eccentric holes 132b and 132c. Similarly, the second hinge A2 has a second hinge portion 133 and a second head portion 134 that are coaxially arranged, the second hinge portion 133 is connected to the second body 120 so as to be driven by the second body 120, the second head portion 134 has second eccentric holes 134b and 134c, and the second end E2 of the linking rod 138 is pivoted to the second eccentric holes 134b and 134c. In the present embodiment, an outer diameter of the second head portion 134 is greater than an outer diameter of the second hinge portion 133, the second head portion 134 further has a second gap 134a, and the second end E2 of the linking rod 138 is located within the second gap 134a so as to be pivoted between the second eccentric holes 134b and 134c.

In addition, the portable electronic device 100 further includes a torque assembly, which is constituted by components 135, 136 and 137, and the first hinge A1 and the second hinge A2 are inserted into the torque assembly in parallel with each other, namely, parallel to the rotation axis X1 and the rotation axis X2.

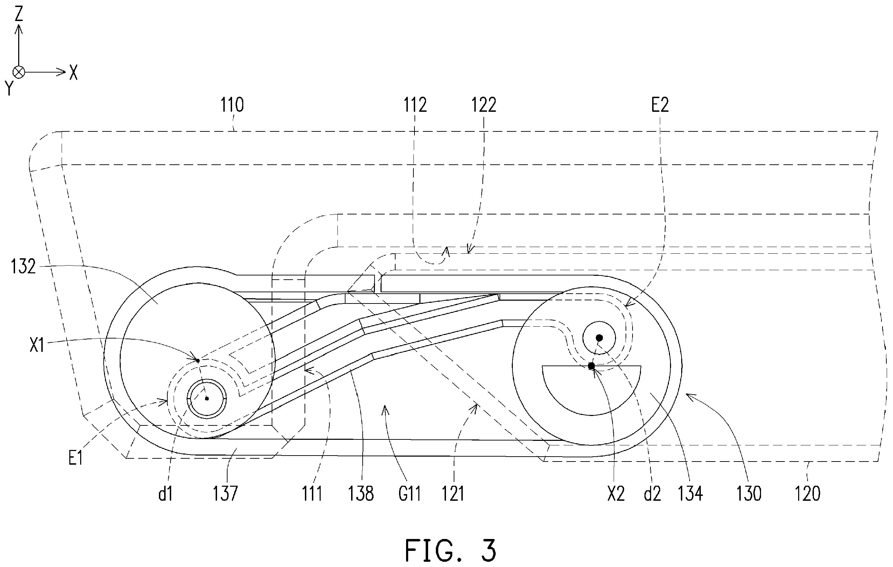

FIG. 3 to FIG. 6 are partial side views illustrating the portable electronic device in different states. At the same time, rectangular coordinates X-Y-Z are provided to facilitate the descriptions of the components, and the rotation axes X1 and X2 are parallel to the X-axis. Referring first to FIG. 2 B and FIG. 3, in further speaking, an eccentric distance d1 of a pivotal connection between the first end E1 and first hinge A1 with respect to the rotation axis X1 of the first hinge A1 is greater than an eccentric distance d2 of a pivotal connection between the second end E2 and the second hinge A2 with respect to the rotation axis X2 of the second hinge A2. In the present embodiment, the eccentric distance d1 is 1.87mm, and the eccentric distance d2 is1.38mm. In other words, this allows the opposite ends of the linking rod 138 to have different motion strokes, and through the eccentric states, to be prevented from being on a straight line with a linear connection between the first hinge A1 and the second hinge A2, thereby avoiding the first body 110 from felling into a dead point of the linking rod mechanism and become unable to move during the movement.

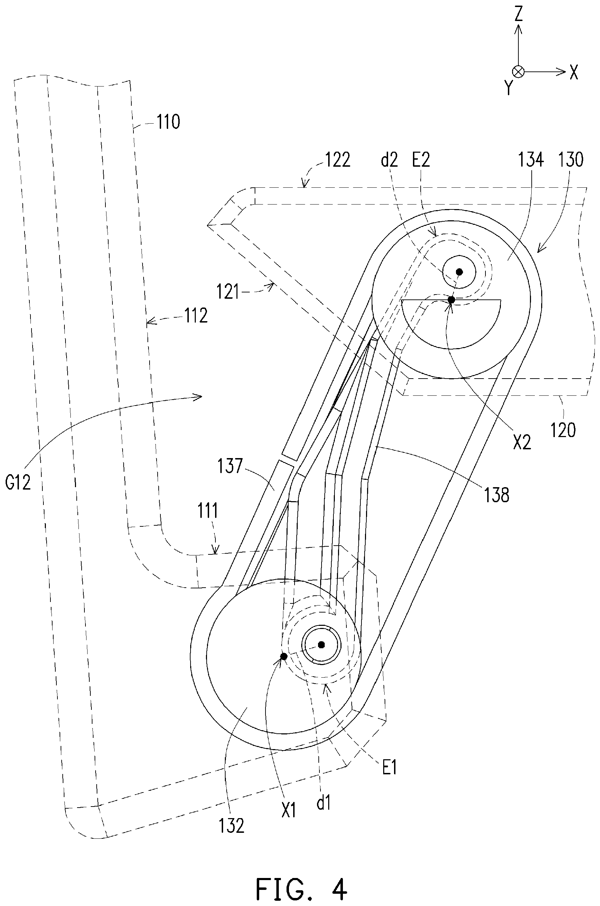

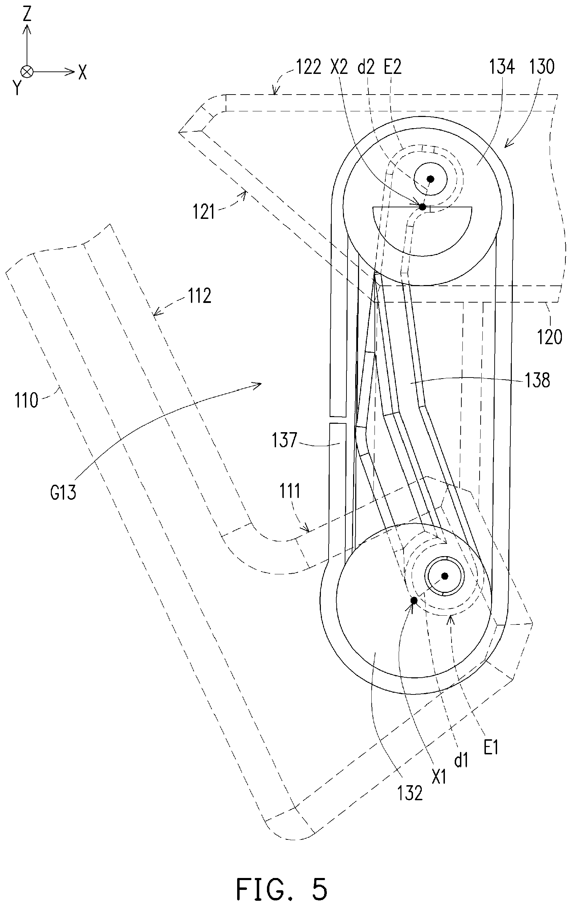

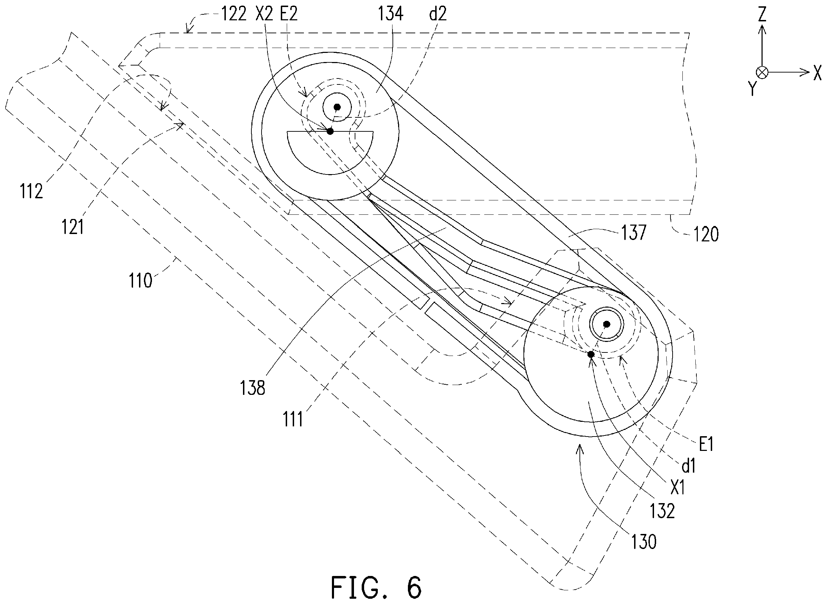

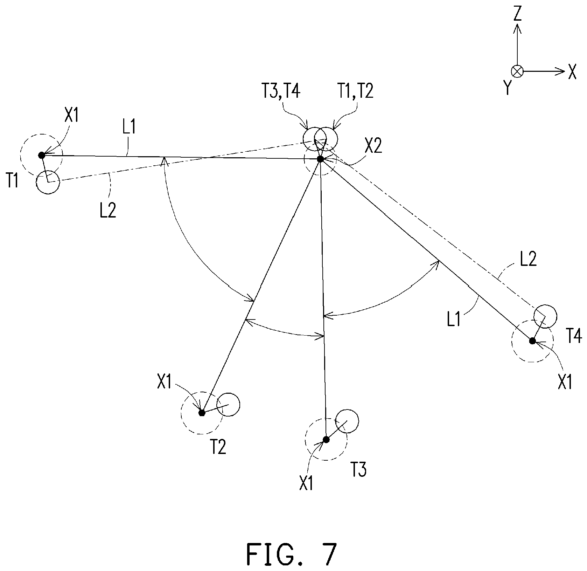

FIG. 7 illustrates a hinge stroke schematic view of the portable electronic device, which shows the above related components in a simple schematic manner, wherein dotted circles respectively represent the first hinge A1 and the second hinge A2, and taking the rotation axes X1 and X2 as examples, solid line circles represent the pivotal connections between (the opposite ends of) the linking rod 138 and the respective first hinge A1 and second hinge A2. Next, referring to FIG. 3 through FIG. 6 in sequence and in correspondence with FIG. 7, the first body 110 and the second body 120 are appeared to be gradually unfolded from a closed state shown in FIG. 3 into an unfolded state shown in FIG. 6; it should be noted that FIG. 7 is a stroke schematic diagram illustrating, by using the second body 120 and its second hinge A2 as a reference, that the first hinge A1 and the linking rod 138 are respectively combined with the pivotal connections of the first hinge A1 and the second hinge A2 into a hinge, wherein a first timing T1 shown in FIG. 7 is an example of a state shown in FIG. 3, a second timing T4 shown in FIG. 7 is an example of a state shown in FIG. 4, a third timing T3 shown in FIG. 7 is an example of a state shown in FIG. 5, and a fourth timing T4 shown in FIG. 7 is an example of a state shown in FIG. 6.

In detail, from the process of FIG. 3 to FIG. 6, a period from the first timing T1 to the third timing T3 is defined as a first stage in which the first body 110 and the second body 120 are unfolded relative to each other by rotation; and during this period, the first body 110 and the second body 120 exhibit movement characteristics of moving away from each other. In contrast, a period from third timing T3 to the fourth timing T4 is defined as a second stage in which the first body 110 and the second body 120 are unfolded relative to each other by rotation; and during this period, the first body 110 and the second body 120 exhibit movement characteristics of moving close to each other. As such, the third timing T3 is regarded as a state transition formed between the first stage and the second stage, and it represents an extreme point where the first body 110 and the second body 120 switch from moving away from each other to moving close to each other. In the present embodiment, corresponding to the relationship between the eccentric distances d1 and d2 of the linking rod 138 and the respective first hinge A1 and second hinge A2, an included angle (unfolding angle) of the portable electronic device 100 which is between the first body 110 and the second body 120 at the state transition is substantially 78% to 88% of a maximum unfolding angle between the first body 110 and the second body 120. For example, the maximum unfolding angle of the present embodiment is 140 degrees, and the unfolding angle at the state transition is 115.3 degrees.

Referring to FIG. 3 to FIG. 6 again, in the present embodiment, the first body 110 has a first surface 111 and a second surface 112 adjacent to the first hinge A1, wherein the second surface 112 is substantially on a same plane with a display surface of the portable electronic device 100; and the second body 120 has a third surface 121 and a fourth surface 122 adjacent to the second hinge A2. In a process of unfolding the first body 110 and the second body 120 from the closed state to the unfolded state, the first surface 111 moves away from the third surface 121 and the second surface 112 moves away from the fourth surface 122.

Furthermore, the first surface 111 is adjacent to the second surface 112 and thus form a (L-shaped) depression, and the third surface 121 is adjacent to the fourth surface 122 and thus form a (wedged-shaped) protrusion. When the first body 110 and the second body 120 are closed with each other, the protrusion is substantially located within the depression, and when the first body 110 and the second body 120 are unfolded relative to each other, the protrusion moves away from the depression, and the depression moves under the second body 120.

In addition, when the first body 110 and the second body 120 are closed, the first surface 111 and the third surface 121 maintain a spacing therebetween, which is a gap G11 shown in FIG. 3; and when the first body 110 and the second body 120 are unfolded, the second surface 112 contacts the third surface 121. In other words, during the unfolding process of switching from FIG. 3 to FIG. 6, through the eccentric configuration of the first hinge A1, the second hinge A2 and the linking rod 138 with respect to the hinge, structures of the first body 110 and the second body 120 at the hinge module 130 can have relative displacements and thus result in an approaching effect, that is, cause the gap G11 between the first body 110 and the second body 120 that is located between the protrusion and the depression shown in FIG. 3 to be expanded along with the unfolding rotations of the device bodies and gradually transform into a gap G12 shown in FIG. 4, a gap G13 shown in FIG. 5 and finally into a state where the third surface 121 is abutted with the second surface 112 of the first body without a space therebetween as shown in FIG. 6. Herein, the gaps G11, G12 and G13 are described by using the third surface 121 of the second body 120 as a reference. In order to make the second surface 112 and the third surface 121 clearly identifiable, two dotted line representing them are separately drawn, but the abutting relationship between the second surface 112 and the third surface 121 is not affected.

Referring to FIG. 7 again, in the present embodiment, an axis (rotation axis XI) of the first hinge A1 and an axis (rotation axis X2) of the second hinge A2 form a first straight line L1 (illustrated with a solid line), the pivotal connection between the first end E1 and the first hinge A1 and the pivotal connection between the second end E2 and the second hinge A2 form a second straight line L2 (illustrated with a dotted chain line). When the first body 110 and the second body 120 are closed, the first straight line L1 and the second straight line L2 are intersected. When the first body 110 and the second body 120 are unfolded (i.e., expanded to the maximum unfolding angle), the first straight line L1 and the second straight line L2 do not intersect. The above are being adopted in the present embodiment to schematically show the eccentric corresponding relationships between the linking rod 138 and the respective first hinge A1 and second hinge A2.

It should be also mentioned that, although the above descriptions only describe the unfolding process of the first body 110 and the second body 120, it is expected that the closing process of the first body 110 and the second body 120 can be known easily by reversing the order of the above steps.

In view of the above, the device bodies of the portable electronic device, in addition to being provided with the dual hinges to serve as the mechanism for rotating to be closed or unfolded with each other, are also connected to the dual hinges via the linking rod, and the two opposite ends of the linking rod and the pivotal connections between the dual hinges are respectively eccentric to the rotation axes of the dual hinges. As such, during the process when the first body and the second body are rotating to be closed or unfolded, the structures of the device bodies that are respectively located adjacent to the hinges can change in relative positions due to the configuration of the linking rod, that is, cause the spaces of the first body and the second body that are nearby each other to be changed, thereby resulting in a corresponding relationship of moving away from or moving closer to each other; and thus, when the device bodies move closer to each other, a fixed spacing between the device bodies that is caused by a fixed distance between the dual hinges can be compensated, so that the device bodies can be maintained in a state of abutting against each other when unfolded, thereby allowing a user to experience better visual effects when operating the portable electronic device.

## Claims

1. A portable electronic device (100), comprising:
a first body (110);
a second body (120);
a first hinge (A1), connected to the first body (110);
a second hinge (A2), connected to the second body (120); and
a linking rod (138), having a first end (E1) and a second end (E2) opposite to each other, wherein the first end (E1) is pivoted to the first hinge (A1) and eccentric to a rotation axis (X1) of the first hinge (A1), the second end (E2) is pivoted to the second hinge (A2) and eccentric to a rotation axis (X2) of the second hinge (A2), wherein the first body (110) and the second body (120) are rotated to be closed to or far away from each other through the first hinge (A1), the second hinge (A2) and the linking rod (138),
the portable electronic device (100) being **characterized in that**
an eccentric distance (d1) of a pivotal connection between the first end (E1) and the first hinge (A1) with respect to the rotation axis (X1) of the first hinge (A1) is greater than an eccentric distance (d2) of a pivotal connection between the second end (E2) and the second hinge (A2) with respect to the rotation axis (X2) of the second hinge (A2).

2. The portable electronic device (100) as recited in claim 1, wherein the first hinge (A1) has a first hinge portion (131) and a first head portion (132) coaxially arranged with each other, the first hinge portion (131) is connected to the first body (110) so as to be driven by the first body (110), the first head portion (132) has at least one first eccentric hole (132b, 132c), and the first end (E1) of the linking rod (138) is pivoted to the first eccentric hole (132b, 132c).

3. The portable electronic device (100) as recited in claim 2, wherein an outer diameter of the first head portion (132) is greater than an outer diameter of the first hinge portion (131), the first head portion (132) further has a first gap (132a), and the first end (E1) of the linking rod (138) is located within the first gap (132a).

4. The portable electronic device (100) as recited in one of the preceding claims, wherein the second hinge (A2) has a second hinge portion (133) and a second head portion (134) coaxially arranged with each other, the second hinge portion (133) is connected to the second body (120) to be driven by the second body (120), the second head portion (134) has at least one second eccentric hole (134b, 134c), and the second end (E2) of the linking rod (138) is pivoted to the second eccentric hole (134b, 134c).

5. The portable electronic device (100) as recited in claim 4, wherein an outer diameter of the second head portion (134) is greater than an outer diameter of the second hinge portion (133), the second head portion (134) further has a second gap (134a), and the second end (E2) of the linking rod (138) is located within the second gap (134a).

6. The portable electronic device (100) as recited one of the preceding claims, further includes a torque assembly, and the first hinge (A1) and the second hinge (A2) are inserted into the torque assembly in parallel with each other.

7. The portable electronic device (100) as recited one of the preceding claims, wherein in a first stage in which the first body (110) and the second body (120) are unfolded relative to each other, the first body (110) is moved away from the second body (120), and in a second stage in which the first body (110) and the second body (120) are unfolded relative to each other, the first body (110) is moved close to the second body (120), and a state transition is formed between the first stage and the second stage, wherein an included angle between the first body (110) and the second body (120) at the state transition is 78% to 88% of a maximum unfolding angle between the first body (110) and the second body (120).

8. The portable electronic device (100) as recited one of the preceding claims, wherein the first body (110) has a first surface (111) and a second surface (112) adjacent to the first hinge (A1), the second body (120) has a third surface (121) and a fourth surface (122) adjacent to the second hinge (A2), and in a process of unfolding the first body (110) and the second body (120) from a closed state to an unfolded state, the first surface (111) is moved away from the third surface (121) and the second surface (112) is moved away from the fourth surface (122).

9. The portable electronic device (100) as recited in claim 8, wherein the first surface (111) is adjacent to the second surface (112) and thus form a depression, the third surface (121) is adjacent to the fourth surface (122) and thus form a protrusion, wherein when the first body (110) and the second body (120) are closed with each other, the protrusion is located within the depression, and when the first body (110) and the second body (120) are unfolded relative to each other, the protrusion is moved away from the depression, and the depression is moved under the second body (120).

10. The portable electronic device (100) as recited in claim 9, wherein when the first body (110) and the second body (120) are closed, a spacing (G11, G12, G13) is kept between the first surface (111) and the third surface (121), and when the first body (110) and the second body (120) are unfolded, the second surface (112) contacts the third surface (121).

11. The portable electronic device (100) as recited one of the preceding claims, wherein an axis of the first hinge (A1) and an axis of the second hinge (A2) form a first straight line (L1), a pivotal connection between the first end (E1) and the first hinge (A1) and a pivotal connection between the second end (E2) and the second hinge (A2) form a second straight line (L2), wherein when the first body (110) and the second body (120) are closed, the first straight line (L1) and the second straight line (L2) are intersected, and when the first body (110) and the second body (120) are unfolded, the first straight line (L1) and the second straight line (L2) do not intersect.

## Patentansprüche

1. Tragbares elektronisches Vorrichtung (100), umfassend:
einen ersten Körper (110);
einen zweiten Körper (120);
ein erstes Scharnier (A1), das mit dem ersten Körper (110) verbunden ist;
ein zweites Scharnier (A2), das mit dem zweiten Körper (120) verbunden ist; und
eine Verbindungsstange (138) mit einem ersten Ende (E1) und einem zweiten Ende (E2), die einander gegenüberliegen, wobei das erste Ende (E1) schwenkbar mit dem ersten Scharnier (A1) verbunden ist und exzentrisch zu einer Drehachse (X1) des ersten Scharniers (A1) ist, wobei das zweite Ende (E2) schwenkbar mit dem zweiten Scharnier (A2) verbunden ist und exzentrisch zu einer Drehachse (X2) des zweiten Scharniers (A2) ist, wobei der erste Körper (110) und der zweite Körper (120) so gedreht werden, dass sie durch das erste Scharnier (A1), das zweite Scharnier (A2) und die Verbindungsstange (138) nahe beieinander oder weit voneinander entfernt sind,
wobei die tragbare elektronische Vorrichtung (100) **dadurch gekennzeichnet ist, dass** ein exzentrischer Abstand (d1) einer schwenkbaren Verbindung zwischen dem ersten Ende (E1) und dem ersten Scharnier (A1) in Bezug auf die Drehachse (X1) des ersten Scharniers (A1) größer ist als ein exzentrischer Abstand (d2) einer schwenkbaren Verbindung zwischen dem zweiten Ende (E2) und dem zweiten Scharnier (A2) in Bezug auf die Drehachse (X2) des zweiten Scharniers (A2).

2. Tragbare elektronische Vorrichtung (100) nach Anspruch 1, wobei das erste Scharnier (A1) einen ersten Scharnierabschnitt (131) und einen ersten Kopfabschnitt (132) aufweist, die koaxial zueinander angeordnet sind, wobei der erste Scharnierabschnitt (131) mit dem ersten Körper (110) so verbunden ist, dass er von dem ersten Körper (110) angetrieben wird, wobei der erste Kopfabschnitt (132) mindestens ein erstes exzentrisches Loch (132b, 132c) aufweist, und das erste Ende (E1) der Verbindungsstange (138) an dem ersten exzentrischen Loch (132b, 132c) angelenkt ist.

3. Tragbares elektronisches Vorrichtung (100) nach Anspruch 2, wobei ein Außendurchmesser des ersten Kopfteils (132) größer ist als ein Außendurchmesser des ersten Scharnierteils (131), wobei der erste Kopfteil (132) ferner einen ersten Spalt (132a) aufweist und das erste Ende (E1) der Verbindungsstange (138) innerhalb des ersten Spalts (132a) angeordnet ist.

4. Tragbare elektronische Vorrichtung (100) nach einem der vorhergehenden Ansprüche, wobei das zweite Scharnier (A2) einen zweiten Scharnierabschnitt (133) und einen zweiten Kopfabschnitt (134) aufweist, die koaxial zueinander angeordnet sind, wobei der zweite Scharnierabschnitt (133) mit dem zweiten Körper (120) verbunden ist, um von dem zweiten Körper (120) angetrieben zu werden, wobei der zweite Kopfabschnitt (134) mindestens ein zweites exzentrisches Loch (134b, 134c) aufweist, und das zweite Ende (E2) der Verbindungsstange (138) an dem zweiten exzentrischen Loch (134b, 134c) angelenkt ist.

5. Tragbare elektronische Vorrichtung (100) nach Anspruch 4, wobei ein Außendurchmesser des zweiten Kopfteils (134) größer ist als ein Außendurchmesser des zweiten Scharnierteils (133), wobei der zweite Kopfteil (134) ferner einen zweiten Spalt (134a) aufweist und das zweite Ende (E2) der Verbindungsstange (138) innerhalb des zweiten Spalts (134a) angeordnet ist.

6. Tragbare elektronische Vorrichtung (100) nach einem der vorangehenden Ansprüche umfassend ferner eine Drehmomentanordnung, und wobei das erste Scharnier (A1) und das zweite Scharnier (A2) parallel zueinander in die Drehmomentanordnung eingesetzt sind.

7. Tragbares elektronisches Vorrichtung (100) nach einem der vorhergehenden Ansprüche, wobei in einer ersten Stufe, in der der erste Körper (110) und der zweite Körper (120) relativ zueinander aufgeklappt sind, der erste Körper (110) von dem zweiten Körper (120) wegbewegt wird, und wobei in einer zweiten Stufe, in der der erste Körper (110) und der zweite Körper (120) relativ zueinander aufgeklappt sind, der erste Körper (110) nahe an den zweiten Körper (120) bewegt wird, und wobei ein Zustandsübergang zwischen der ersten Stufe und der zweiten Stufe gebildet wird, wobei ein eingeschlossener Winkel zwischen dem ersten Körper (110) und dem zweiten Körper (120) an dem Zustandsübergang 78% bis 88% eines maximalen Entfaltungswinkels zwischen dem ersten Körper (110) und dem zweiten Körper (120) beträgt.

8. Tragbare elektronische Vorrichtung (100) nach einem der vorhergehenden Ansprüche, wobei der erste Körper (110) eine erste Fläche (111) und eine zweite Fläche (112) neben dem ersten Gelenk (A1) aufweist, wobei der zweite Körper (120) eine dritte Fläche (121) und eine vierte Fläche (122) neben dem zweiten Gelenk (A2) aufweist, und wobei in einem Prozess des Entfaltens des ersten Körpers (110) und des zweiten Körpers (120) von einem geschlossenen Zustand in einen entfalteten Zustand die erste Fläche (111) von der dritten Fläche (121) wegbewegt wird und die zweite Fläche (112) von der vierten Fläche (122) wegbewegt wird.

9. Tragbares elektronisches Vorrichtung (100) nach Anspruch 8, wobei die erste Fläche (111) an die zweite Fläche (112) angrenzt und somit eine Vertiefung bildet, und wobei die dritte Fläche (121) an die vierte Fläche (122) angrenzt und somit einen Vorsprung bildet, wobei, wenn der erste Körper (110) und der zweite Körper (120) miteinander geschlossen sind, sich der Vorsprung innerhalb der Vertiefung befindet, und wenn der erste Körper (110) und der zweite Körper (120) relativ zueinander aufgeklappt werden, der Vorsprung von der Vertiefung wegbewegt wird und die Vertiefung unter den zweiten Körper (120) bewegt wird.

10. Tragbare elektronische Vorrichtung (100) nach Anspruch 9, wobei, wenn der erste Körper (110) und der zweite Körper (120) geschlossen sind, ein Abstand (G11, G12, G13) zwischen der ersten Fläche (111) und der dritten Fläche (121) beibehalten wird, und wenn der erste Körper (110) und der zweite Körper (120) ausgeklappt sind, die zweite Fläche (112) die dritte Fläche (121) berührt.

11. Tragbares elektronisches Vorrichtung (100) nach einem der vorhergehenden Ansprüche, wobei eine Achse des ersten Gelenks (A1) und eine Achse des zweiten Gelenks (A2) eine erste gerade Linie (L1) bilden, wobei eine Schwenkverbindung zwischen dem ersten Ende (E1) und dem ersten Gelenk (A1) und eine Schwenkverbindung zwischen dem zweiten Ende (E2) und dem zweiten Gelenk (A2) eine zweite gerade Linie (L2) bilden, wobei, wenn der erste Körper (110) und der zweite Körper (120) geschlossen sind, die erste gerade Linie (L1) und die zweite gerade Linie (L2) sich schneiden, und wenn der erste Körper (110) und der zweite Körper (120) aufgeklappt sind, die erste gerade Linie (L1) und die zweite gerade Linie (L2) sich nicht schneiden.

## Revendications

1. Le dispositif électronique portable (100) comprenant:
un premier corps (110);
un deuxième corps (120); et
une première charnière (A1) reliée au premier corps (110); et
une deuxième charnière (A2) reliée au deuxième corps (120); et
une bielle (138) ayant une première extrémité (E1) et une seconde extrémité (E2) se faisant face, la première extrémité (E1) étant reliée de manière pivotante à la première charnière (A1) et étant excentrée par rapport à un axe de rotation (X1) de la première charnière (A1), dans lequel la seconde extrémité (E2) est connectée de manière pivotante à la seconde charnière (A2) et est excentrée par rapport à un axe de rotation (X2) de la seconde charnière (A2), dans lequel le premier corps (110) et le second corps (120) sont tournés pour être proches ou éloignés l'un de l'autre par la première charnière (A1), la seconde charnière (A2) et la tige de connexion (138),
le dispositif électronique portable (100) étant **caractérisé en ce que** une distance excentrique (d1) d'une connexion pivotante entre la première extrémité (E1) et la première charnière (A1) par rapport à l'axe de rotation (X1) de la première charnière (A1) est supérieure à une distance excentrique (d2) d'une connexion pivotante entre la seconde extrémité (E2) et la seconde charnière (A2) par rapport à l'axe de rotation (X2) de la seconde charnière (A2).

2. Le dispositif électronique portable (100) selon la revendication 1, dans lequel ladite première charnière (A1) comprend une première partie de charnière (131) et une première partie de tête (132) disposées coaxialement l'une par rapport à l'autre, ladite première partie de charnière (131) étant reliée audit premier corps (110) de telle sorte, pour être entraînée par le premier corps (110), la première partie de tête (132) ayant au moins un premier trou excentrique (132b, 132c), et la première extrémité (E1) de la bielle (138) étant articulée sur le premier trou excentrique (132b, 132c).

3. Le dispositif électronique portable (100) selon la revendication 2, dans lequel un diamètre extérieur de la première partie de tête (132) est plus grand qu'un diamètre extérieur de la première partie de charnière (131), dans lequel la première partie de tête (132) comprend en outre un premier espace (132a), et la première extrémité (E1) de la tige de connexion (138) est disposée dans le premier espace (132a).

4. Le dispositif électronique portable (100) selon l'une quelconque des revendications précédentes, dans lequel la deuxième charnière (A2) comprend une deuxième partie de charnière (133) et une deuxième partie de tête (134) disposées coaxialement l'une par rapport à l'autre, la deuxième partie de charnière (133) étant reliée au deuxième corps (120), pour être entraînée par le second corps (120), dans lequel la seconde partie de tête (134) a au moins un second trou excentrique (134b, 134c), et la seconde extrémité (E2) de la bielle (138) est articulée sur le second trou excentrique (134b, 134c).

5. Le dispositif électronique portable (100) selon la revendication 4, dans lequel un diamètre extérieur de la seconde partie de tête (134) est plus grand qu'un diamètre extérieur de la seconde partie de charnière (133), dans lequel la seconde partie de tête (134) comprend en outre un second espace (134a), et la seconde extrémité (E2) de la tige de connexion (138) est disposée dans le second espace (134a).

6. Le dispositif électronique portable (100) selon l'une quelconque des revendications précédentes comprenant en outre un ensemble de couple, et dans lequel la première charnière (A1) et la deuxième charnière (A2) sont insérées dans l'ensemble de couple en parallèle l'une avec l'autre.

7. Le dispositif électronique portable (100) selon l'une quelconque des revendications précédentes, dans lequel dans une première étape dans laquelle le premier corps (110) et le deuxième corps (120) sont dépliés l'un par rapport à l'autre, le premier corps (110) est éloigné du deuxième corps (120), et dans lequel dans une deuxième étape dans laquelle le premier corps (110) et le deuxième corps (120) sont dépliés l'un par rapport à l'autre, le premier corps (110) est déplacé à proximité du second corps (120), et dans lequel une transition d'état est formée entre le premier stade et le second stade, dans lequel un angle inclus entre le premier corps (110) et le second corps (120) à la transition d'état est de 78 % à 88 % d'un angle de déploiement maximum entre le premier corps (110) et le second corps (120).

8. Le dispositif électronique portable (100) selon l'une quelconque des revendications précédentes, dans lequel le premier corps (110) présente une première surface (111) et une deuxième surface (112) adjacente à la première articulation (A1), dans lequel le deuxième corps (120) présente une troisième surface (121) et une quatrième surface (122) adjacente à la deuxième articulation (A2), et dans lequel, dans un processus de dépliage du premier corps (110) et du deuxième corps (120) d'un état fermé à un état déplié, la première surface (111) est éloignée de la troisième surface (121) et la deuxième surface (112) est éloignée de la quatrième surface (122).

9. Le dispositif électronique portable (100) de la revendication 8, dans lequel la première surface (111) est adjacente à la deuxième surface (112) pour former un évidement, et dans lequel la troisième surface (121) est adjacente à la quatrième surface (122) pour former une saillie, dans lequel, lorsque le premier corps (110) et le second corps (120) sont fermés ensemble, la saillie est située à l'intérieur de l'évidement, et lorsque le premier corps (110) et le second corps (120) sont dépliés l'un par rapport à l'autre, la saillie est éloignée de l'évidement et l'évidement est déplacé sous le second corps (120).

10. Le dispositif électronique portable (100) selon la revendication 9, dans lequel lorsque le premier corps (110) et le deuxième corps (120) sont fermés, une distance (G11, G12, G13) est maintenue entre la première surface (111) et la troisième surface (121), et lorsque le premier corps (110) et le deuxième corps (120) sont dépliés, la deuxième surface (112) est en contact avec la troisième surface (121).

11. Le dispositif électronique portable (100) de l'une quelconque des revendications précédentes, dans lequel un axe de la première articulation (A1) et un axe de la seconde articulation (A2) forment une première ligne droite (L1), dans lequel une connexion pivotante entre la première extrémité (E1) et la première articulation (A1) et une connexion pivotante entre la seconde extrémité (E2) et la seconde articulation (A2) forment une seconde ligne droite (L2), dans lequel lorsque le premier corps (110) et le second corps (120) sont fermés, la première ligne droite (L1) et la seconde ligne droite (L2) se croisent, et lorsque le premier corps (110) et le second corps (120) sont dépliés, la première ligne droite (L1) et la seconde ligne droite (L2) ne se croisent pas.
